# EUROPÄISCHE PATENTSCHRIFT

(11) **EP 2 623 009 B1**
(45) Veröffentlichungstag und Bekanntmachung des Hinweises auf die Patenterteilung: **20.08.2014**
(21) Anmeldenummer: 13000462.5
(22) Anmeldetag: 31.01.2013
(51) Int. Cl.: A47L 9/24, F16L 37/084

(54) **Steckverbindbare Staubsauger- Saugrohranordnung mit einem Muffenteil**
Plug-in vacuum cleaner suction pipe assembly with a sleeve
Dispositif d'encliquetage de tuyau d'aspiration d'aspirateur avec manchon

(30) Priorität: 06.02.2012 DE 102012002101
(43) Veröffentlichungstag der Anmeldung: 07.08.2013
(73) Patentinhaber: Roxxan GmbH, 42855 Remscheid (DE)
(72) Erfinder: Niemenmaa, Ahti Eljas, Suzhou 215015 (TW)
(74) Vertreter: Ostriga Sonnet Wirths & Vorwerk

(56) Entgegenhaltungen:
- EP-A2- 0 418 942
- EP-B1- 1 204 362
- WO-A1-97/12168
- DE-A1-102007 039 810

## Beschreibung

Die Erfindung betrifft eine steckverbindbare Staubsauger-Saugrohranordnung mit einer Muffe, welche eine Steckaufnahme bildet, in welche ein Rohreinsteckende in Axialrichtung eingesteckt und über Verriegelungsmittel lösbar schnappverrastend gehalten ist, wobei die Verriegelungsmittel muffenseitig von einem Rastkörper und rohrseitig von einer den Rastkörper aufnehmenden Rastvertiefung gebildet sind und wobei der Rastkörper in einer muffenseitigen Aussparung gelagert ist und mit einem Betätigungsschieber, welcher an der Muffe gegen eine Federrückstellkraft axial beweglich geführt ist und eine Sperrfläche sowie einen Ausweichraum für den Rastkörper ausbildet, wobei die Sperrfläche in der neutralen Axialposition des Betätigungsschiebers den Rastkörper in der Rastvertiefung hält und der Rastkörper in einer gegen die Federrückstellkraft verlagerten Position des Betätigungsschiebers in den Ausweichraum bewegbar ist und mit einer der Stirnfläche des Rohreinsteckendes zugeordneten Steuerfläche, die beim Einstecken in die Muffe den Rastkörper aus seiner Riegelstellung in eine Lösestellung drängt und mit einer der Rastvertiefung zugeordneten zweiten Steuerfläche, welche beim Lösen der Schnappverrastung den Rastkörper relativ zur Sperrfläche axial verlagert und entriegelnd in den Ausweichraum drängt.

Gattungsgemäße Staubsauger-Saugrohranordnungen bilden häufig den Übergangsbereich von einem Staubsauger-Saugrohr zu einem Bodenwerkzeug, wie Saugdüse, Bodenbürste oder aber zum Handgriff und einem daran befestigten Saugschlauch eines Staubsaugers. Ziel solcher Anordnungen ist eine schnell verrastende, aber auch leicht wieder lösbare Verbindung beider Teile unter Einhaltung eines Höchstmaßes an Luftdichtigkeit zu schaffen, um einerseits das Wechseln von Saugwerkzeugen für den Benutzer einfach zu gestalten und anderseits Saugkraftverluste durch die lösbare Verbindung zu minimieren.

Die vorliegende Erfindung geht hierbei von EP 1 204 362 B1 aus, welche bereits eine steckverbindbare Staubsauger-Saugrohranordnung offenbart. Dort ist ein Rastkörper in einer Ausnehmung einer Muffe gelagert und über ein zungenartiges Bauteil an der Muffe festgelegt. Ein Betätigungsschieber weist einen Sperrvorsprung mit einer Sperrfläche auf und ist entgegen einer Federkraft in beide Axialrichtungen der Anordnung bewegbar gelagert. In seiner Neutralstellung hält die Sperrfläche den Sperrkörper in einer Rastvertiefung des Rohreinsteckendes und somit in seiner Riegelstellung. Beim Lösen wird das Rohr einerseits und der Betätigungsschieber andererseits gegriffen und beide werden in gegensätzliche Axialrichtungen bewegt. Hierdurch findet eine Relativbewegung zwischen Rastkörper und Sperrfläche statt und der Rastkörper gelangt in den Bereich eines sich an den Sperrkörper anschließenden Ausweichraumes. Eine Steuerfläche der Rastvertiefung drängt den Rastkörper in den Ausweichraum hinein und somit in seine Lösestellung.

Beim Einstecken des Rohreinsteckendes in die Muffe läuft eine Steuerfläche der Rohrstirnseite auf den Rastkörper auf. Es findet wiederum eine Relativverlagerung von Rastkörper und zugeordneter Sperrfläche statt, bis die stirnseitige Steuerfläche den Rastkörper in einen zweiten, der Sperrfläche nachgelagerten Ausweichraum in Lösestellung bewegt werden kann. Sobald die rohrseitige Rastvertiefung kongruent zum Rastkörper angeordnet ist, gleitet letzterer in die Rastvertiefung hinein. Darauf folgend bewegt sich der Betätigungs schieber du rch die Federkraft in ihre Neutrallage zurück, die Sperrfläche hält den Sperrkörper in Riegelstellung.

Die vorbeschriebene Saugrohranordnung erfüllt die Anforderungen an ein leichtes Koppeln und Entkoppeln von Staubsauger-Saugrohr und Saugwerkzeug bereits sehr gut, wird jedoch insbesondere im Hinblick auf den Kuppelvorgang als verbesserungswürdig empfunden.

Aus dem heterogenen Stand der Technik sind Schnellkuppelsysteme bekannt, die für fluid- oder gasführende Schlauchverbindungen genutzt werden. Eine solche Schnellkupplung ist beispielsweise aus EP 0 418 942 A2 bekannt und umfasst eine Muffe, in die ein Steckfortsatz eingeschoben wird. Beim Einschieben des Steckfortsatzes in die Muffe werden Sperrkugeln unter einer Sperrfläche hinweg und radial nach außen in einen Ausweichraum gedrängt. Erreicht der Steckfortsatz in der Muffe seine Kupplungsposition, werden die Sperrkugeln von einem Schraubenfederelement radial nach innen zurück und in steckkupplungsseitige Riegelausnehmungen hineingedrängt. Dort werden sie von einer Sperrfläche einer die Muffe umgebenden Hülse gehalten. Die Abdichtung gegen Fluid- oder Gasaustritt wird durch einen, in diesem Fall muffenseitig montierten, Dichtring in Form eines O-Ringes realisiert. Der eigentliche Kupplungsmechanismus, bestehend aus Hülse, Federelement, Sperrkugel und muffenseitiger Lagerausnehmung für die Sperrkugel, weist eine Vielzahl von Spalten, Öffnungen und Durchtritten auf, durch die Leckströme austreten würden, wenn nicht der vorgenannte Dichtring Teil der Kupplungsanordnung wäre.

Ausgehend von steckverbindbaren Staubsauger-Saugrohranordnung gemäß EP 1 204 362 B1 ist es Aufgabe der Erfindung, eine verbesserte steckverbindbare Staubsauger-Saugrohranordnung zu schaffen, bei der insbesondere der Kuppelvorgang von Saugrohr und Muffe optimiert ist.

Gelöst wird die Aufgabe von einem Gegenstand mit den Merkmalen des Anspruches 1, insbesondere mit den kennzeichnenden Merkmalen, wonach der Betätigungsschieber beim Einstecken des Rohreinsteckendes in die Muffe in seiner Neutralstellung verbleibt und die erste Steuerfläche beim Einstecken des Rohreinsteckendes in die Muffe den Rastkörper federrückstellelastisch aus seiner Riegelstellung in seine Lösestellung drängt. So wird vermieden, dass der Benutzer beim Befestigen von Rohr und Muffe aneinander durch eine vermeintliche Ausweichbewegung der Bauteile (Lösehub des Betätigungsschiebers) irritiert wird.

Ausgehend von der Erkenntnis, dass insbesondere die Relativverlagerung von Rastkörper bzw. Muffe und Betätigungsschieber beim Kuppelvorgang zu Irritationen beim Benutzer führen kann, wurde eine Schnappverrastung geschaffen, bei welcher auf einen Lösehub des Betätigungsschiebers verzichtet wird.

Dabei ist vorgesehen, dass die muffenseitige Aussparung einen Ausweichabschnitt ausbildet, in welchen der von der ersten Steuerfläche in seine Lösestellung gedrängte Rastkörper verlagerbar ist. In konkreter Ausgestaltung ist vorgesehen, dass die erste Steuerfläche beim Einstecken des Rohreinsteckendes in die Muffe den Rastkörper federrückstellelastisch aus seiner Riegelstellung gegen die Sperrfläche des Betätigungsschiebers in seine Lösestellung drängt, wobei der Rastkörper in den Ausweichabschnitt verlagert wird. Der wesentliche Vorteil besteht darin, dass der Rastkörper während des Einsteckvorganges unterhalb der Sperrfläche verbleibt und sich nicht etwa in einen sich an die Sperrfläche anschließenden Ausweichraum verlagert. Auf diese Weise ist gewährleistet, dass bei erfolgreicher Positionierung der rohrseitigen Rastvertiefung unterhalb des Rastkörpers letztere sich in seine Riegelstellung zurückverlagert.

Es ist daran gedacht, dass die erste Steuerfläche beim Einstecken des Rohreinsteckendes in die Muffe den Rastkörper federrückstellelastisch aus seiner Riegelstellung gegen die Sperrfläche des Betätigungsschiebers in seine Lösestellung drängt, wobei sich eine konkrete Ausführungsform dadurch kennzeichnet, dass der Rastkörper ein federrückstellelastisches Glied aufweist, welches sich an der Sperrfläche abstützt und den Rastkörper in seiner Sperrstellung hält, beim Einstecken des Rohres jedoch federrückstellelastisch gegen die Sperrfläche gedrängt und in den Ausweichabschnitt verlagert wird. Eine weitere konkrete Ausführungsform ist dadurch gekennzeichnet, dass der Rastkörper im Wesentlichen V-förmig ausgebildet ist, sich mit seinen Schenkeln an der Sperrfläche abstützt und dass der in Einsteckrichtung axial hinten liegende Schenkel federrückstellelastisch ausgebildet ist.

Um bei einer Gegenbewegung in Form einer Zugbelastung am Rohr entgegen der Einsteckrichtung ein ungewolltes Entriegeln zu verhindern, ist vorgesehen, dass der in Einsteckrichtung axial vorn liegende Schenkel des Rastkörpers im Wesentlichen unelastisch ausgebildet ist. Dieser im Wesentlichen unelastische Schenkel des Rastkörpers wird durch eine Zugbelastung in die Rastvertiefung hinein gedrängt und verstärkt so die Riegelwirkung.

Um eine korrekte Ausrichtung zwischen einem Staubsaugersaugrohr und einem Saugwerkzeug bzw. bei einem Handgriff sicher zu stellen, ist vorgesehen, dass der Rastkörper in der muffenseitigen Ausnehmung und in seiner Riegelstellung in der Rastvertiefung in Umfangsrichtung lediglich mit einem Fassungsspiel gelagert ist und so die Saugrohranordnung verdrehsicher hält. Insoweit hat der Rastkörper eine Doppelfunktion, indem er das Rohreinsteckende in der Muffe hält und gleichzeitig eine korrekte Ausrichtung in Umfangsrichtung sicherstellt.

Um die rohrseitige Rastvertiefung korrekt dem Rastkörper zuzuführen, ist vorgesehen, dass das Rohreinsteckende mit einer axialen Führungsnut versehen ist, innerhalb derer die Rastvertiefung angeordnet ist und die sich bis zur Stirnseite des Rohreinsteckendes erstreckt, insbesondere wenn der Rastkörper beim Einstecken des Rohreinsteckendes in die Muffe in die rohrseitige Führungsnut eingreift.

Für Herstellungs- und Montagezwecke ist es sinnvoll, wenn die Muffe von einem Hülsenbauteil ausgebildet ist, welches an einem Rohrelement angeordnet ist.

Die für die lösbare Schnappverrastung vorgesehenen Bauteile lassen sich so als Baugruppe vorkonfigurieren und vormontieren und brauchen im Anschluss daran nur noch an ein entsprechendes Rohrelement angesetzt zu werden, was die automatisierte Fertigung wesentlich vereinfacht.

Um hierbei ein optisch ansprechendes Ergebnis zu erhalten und ein unautorisiertes Lösen der vorbeschriebenen Baugruppe zu verhindern, ist vorgesehen, dass der Betätigungsschieber in seiner Neutrallage das Hülsenbauteil und den Anordnungsbereich von Hülsenbauteil und Rohrelement überfängt.

Schließlich ist vorgesehen, dass der Betätigungsschieber lediglich in Rohreinsteckrichtung axial verlagerbar ist.

Für ein besseres Verständnis der Erfindung sowie zum Aufzeigen weiterer Vorteile wird auf nachfolgende Beschreibung eines Ausführungsbeispiels verwiesen. Es zeigen:
- Figur 1:: Eine Teilansicht einer steckverbindbaren Staubsauger-Saugrohranordnung bei beginnendem Einsteckvorgang in Schnittdarstellung,
- Figur 2:: die Darstellung gemäß Figur 1 in fortgesetzten Einsteckvorgang,
- Figur 3:: die Darstellung gemäß Figur 1 mit beendetem Einsteckvorgang,
- Figur 4a:: die Darstellung gemäß Figur 1 mit beginnendem Auszugvorgang,
- Figur 4b:: eine Detaildarstellung gemäß Ausschnittskreis IV b in Fig. 4a
- Figur 5:: eine Schnittdarstellung des Betätigungsschiebers,
- Figur 6:: eine Darstellung des Rastkörpers in Seitenansicht.

In den Figuren ist eine Staubsauger-Saugrohranorndung insgesamt mit der Bezugsziffer 10 bezeichnet. Sie umfasst zunächst eine Rohrstutzen 11 als Teil eines Handgriffes, eines Verbindungsstückes zu einem Saugschlauch oder als Teil eines Bodenwerkzeuges wie Saugdüse oder Saugbürste. Ein Hülsenbauteil 12 bildet eine Muffe 13 als Steckaufnahme für das Rohreinsteckende 14 eines Staubsaugersaugrohres.

Das Hülsenbauteil 12 ist vollumfänglich von einem Betätigungsschieber 15 umgeben und hält einen Rastkörper 16 in einer Aussparung 17. Am Hülsenbauteil 12 ist ein Federelement 18 in Form einer Stabfeder 19 angeordnet und über eine in die Innenumfangsfläche des Betätigungsschiebers 15 eingearbeitete Nut 20 mit dem Betätigungsschieber 15 bewegungsgekoppelt. In Einsteckrichtung e vorn gelegen bildet das Hülsenbauteil 12 einen radial vorspringenden Flansch 21 aus, welcher als Bewegungsendanschlag für den Betätigungsschieber 15 in Auszugsrichtung a dient. Die Aussparung 17 des Hülsenbauteils 12 weist einen Durchbruch 22 in den Muffeninnenraum auf, durch den der Rastkörper 16 in seiner Riegelstellung hindurchtaucht. In Einsteckrichtung e dem Durchbruch 22 nachgelagert liegt ein von der Aussparung 17 gebildeter Ausweichabschnitt 23 für den Rastkörper 16.

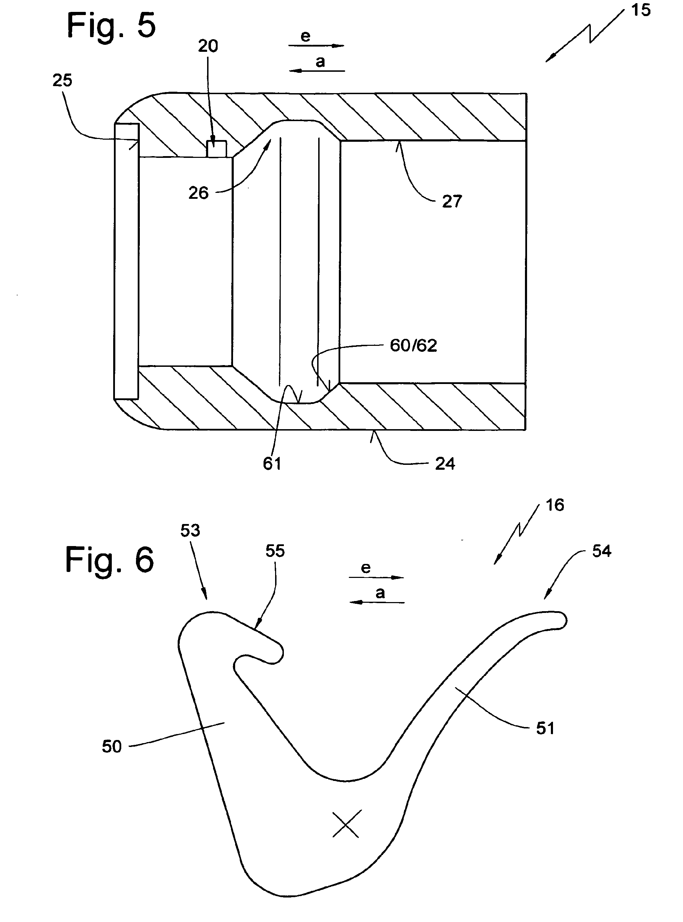

Der Betätigungsschieber 15 bildet zunächst außenumfänglich eine Grifffläche 24 aus, die seiner Handhabung dient. Die in Einsteckrichtung e vorn liegende Stirnfläche 25 des Betätigungsschiebers 15 korrespondiert mit dem hülsenseitigen Flansch 21 und blockiert bei Anlage an selbigem jede weitere Bewegung in die Axialauszugsrichtung a. Innenumfänglich bildet der Betätigungsschieber 15 neben der Haltenut 20 für die Stabfeder 19 einen Ausweichraum 26 für den Rastkörper 16 und eine den Rastkörper 16 in Riegelstellung haltende Sperrfläche 27 aus. Wie insbesondere aus Fig. 5 hervorgeht, wird der Ausweichraum 26 von einer in etwa keilartigen, innenumfänglich umlaufenden Nut gebildet. Das Einbringen der Nut als Ausweichraum 26 im Bereich des Sperrkörpers ist jedoch ausreichend. Die in Einsteckrichtung e hinten liegende Nutwand 60 bildet eine vom Nutboden 61 in Einsteckrichtung e steigende Steuerschräge 62.

Das Rohreinsteckende 14 ist im Wesentlichen kreiszylindrisch und in seinem Außendurchmesser steckkomplementär zum Innendurchmesser der Muffe 13 ausgebildet. Außenumfänglich in axialer Längsrichtung bildet das Rohreinsteckende 14 eine Führungsnut 28 und eine im Bereich der Führungsnut 28 angeordnete Rastvertiefung 29 aus. Die Führungsnut 28 erstreckt sich bis zur Stirnseite 30 des Rohreinsteckendes 14, die Rastvertiefung 29 korrespondiert mit dem Rastkörper 16.

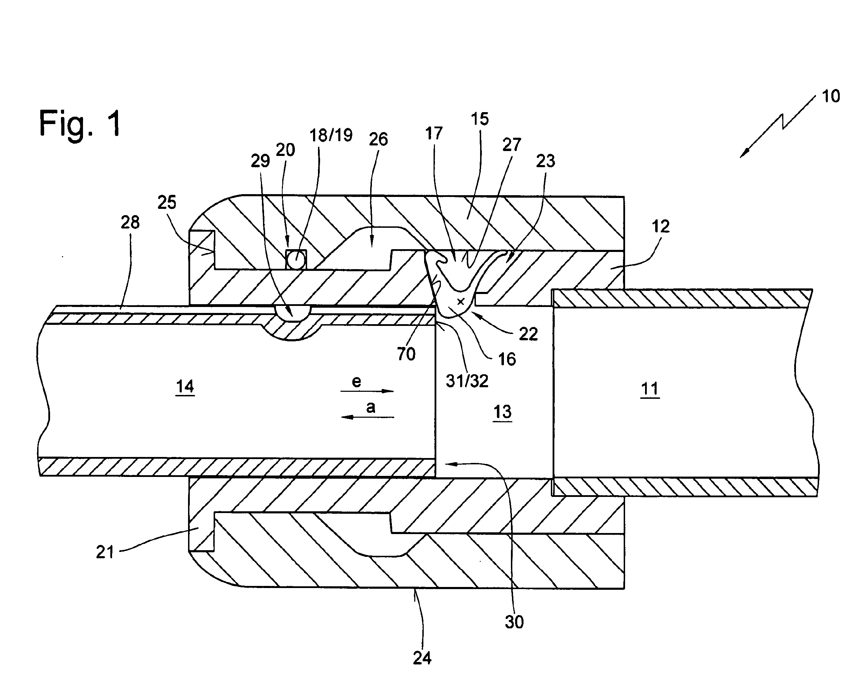

Zum Herstellung einer schnappverrastenden Staubsauger-Saugrohranordnung wird das Rohreinsteckende 14 in die Muffe 13 eingeschoben, wobei die Führungsnut 28 mit dem durch den Durchbruch 22 in den Muffeninnenraum 13 hineinragenden Sperrkörper 16 fluchtet. Die Stirnfläche 31 der rohrseitigen Stirnseite 30 bildet eine erste Steuerfläche 32 und läuft beim Einstecken des Rohreinsteckendes 14 in die Muffe 13 auf den Sperrkörper 16 auf. Dies ist in Figur 1 dargestellt.

Beim weiteren Einschieben des Rohreinsteckendes 14 in Einsteckrichtung e drängt die Steuerfläche 32 den Sperrkörper 16 durch den Durchbruch 22 in die Aussparung 17 des Hülsenbauteils 12.

Der Sperrkörper 16 (Fig. 6) ist im Wesentlichen V-förmig gebildet und weist einen starren, ersten Schenkel 50 auf, der in Einsteckrichtung e vorn angeordnet ist. Ein in Einsteckrichtung e hinten liegender zweiter Schenkel 51 ist federrückstellelastisch ausgebildet. Erster und zweiter Schenkel 50/51 des Rastkörpers 16 stützen sich mit ihren freien Enden 53/54 an der Sperrfläche 27 des Betätigungsschiebers 15 ab. Das in Einsteckrichtung e vorn gelegene freie Ende 53 des ersten Schenkels 50 bildet eine mit der Steuerschräge 62 des Ausweichraumes 26 korrespondierende Gegensteuerschräge 55 aus. Im konkreten Ausführungsbeispiel ist das freie Ende 53 hierzu mit einem in Einsteckrichtung e weisenden, hakenförmigen Fortsatz versehen. Die Rückverlagerung des Rastkörpers 16 durch den Durchbruch 22 in die Aussparung 17 hat eine Spreizung des Schenkels 51 in Einsteckrichtung e zur Folge. Da der erste Schenkel 50 im Wesentlichen starr ist, wird insbesondere der federrückstellelastische Schenkel 51 unter Aufbau einer Rückstellkraft in Einsteckrichtung e in den Ausweichabschnitt 23 der Aussparung 17 verlagert.

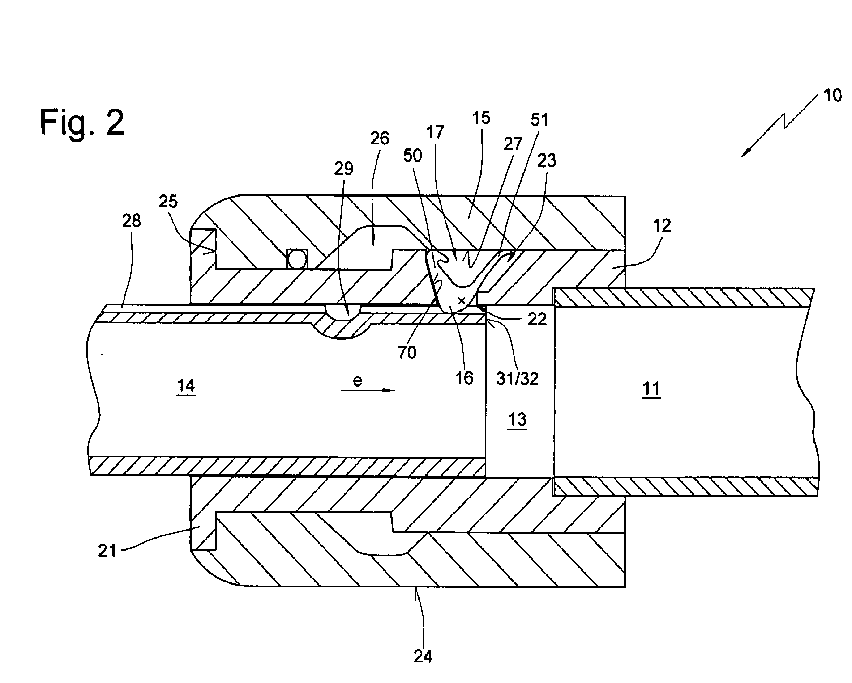

Der Rastkörper 16 gleitet in die Führungsnut 28 ein, wobei die Rückstellkräfte des zweiten Schenkels 51 den Rastköper 16 tendenziell in seine Riegelstellung zurückverlagern. Dies ist in Figur 2 dargestellt. Es ist leicht vorstellbar, dass es zur Rückverlagerung des Rastkörpers 16 - induziert durch die Steuerfläche 32, nicht auf die Führungsnut 28 ankommt. Fehlt diese, gleitet der Rastkörper beim Einstecken des Rohreinsteckendes 14 in die Muffe 13 auf der Außenumfangsfläche des Rohreinsteckendes 14 und nicht im Nutboden der Führungsnut 28 ab. Um das Rohreinsteckende 14 korrekt zur Muffe 13 auszurichten sind dann geeignete Markierungen vorzusehen, die die korrekte Ausrichtung zumindest visualisieren.

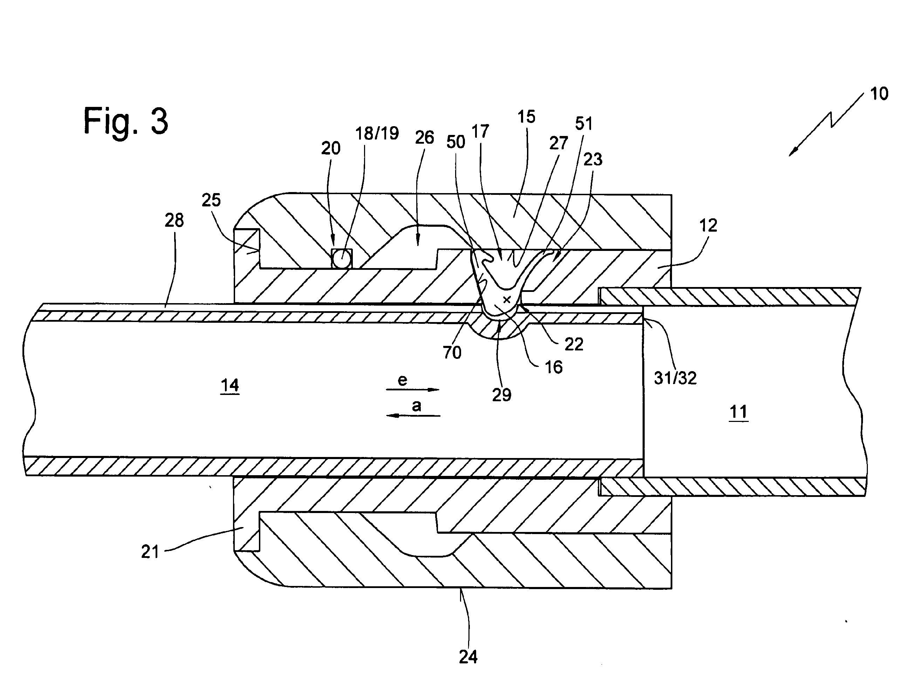

In Figur 3 gelangt die rohrseitige Rastvertiefung 29 - geführt durch die Führungsnut 28 - unter den Durchbruch 22 des Hülsenbauteils 12. Der Rastkörper 16 taucht, induziert durch die Rückstellkräfte des zweiten Schenkels 51, unmittelbar in die Rastvertiefung 29 ein und verriegelt so das Rohreinsteckende 14 in der Muffe 13.

Im Gegensatz zum Stand der Technik findet beim Einstecken des Rohreinsteckendes 14 in die Muffe 13 keine Relativverlagerung der Sperrfläche 26 zum Rastkörper 16 statt. Wie aus den Figuren 1 bis 3 hervor geht, bleibt der Betätigungsschieber 15 in seiner Neutrallage. Zum Lösen der Rastverbindung wird nun einerseits am Betätigungsschieber 15 und anderseits am Rohreinsteckende 14 angegriffen. Beide Bauteile werden in die entgegengesetzten Axialrichtungen e, a gezogen. Hierbei drängt eine zweite in den Figuren nicht näher bezeichnete Steuerfläche der Rastvertiefung 29 den ersten Schenkel 50 gegen die Sperrfläche 26 und gegen die in Einsteckrichtung e vorn liegende, axiale Aussparungswand 70 der Aussparung 17.

Die Betätigungshülse 15 wird unter Aufbau einer Rückstellkraft der Stabfeder 19 in Relation zum Hülsenbauteil 12 in Einsteckrichtung e verlagert. Dies führt gleichfalls zu einer Relativverschiebung zwischen Sperrfläche 27 und Rastkörper 16, insbesondere zwischen Sperrfläche 27 und dem ersten Schenkel 50. Die Sperrfläche 27 gleitet über den ersten Schenkel 50 hinweg bis dieser in den Bereich des in Einsteckrichtung e vor der Sperrfläche 27 angeordneten Ausweichraums 26 gelangt.

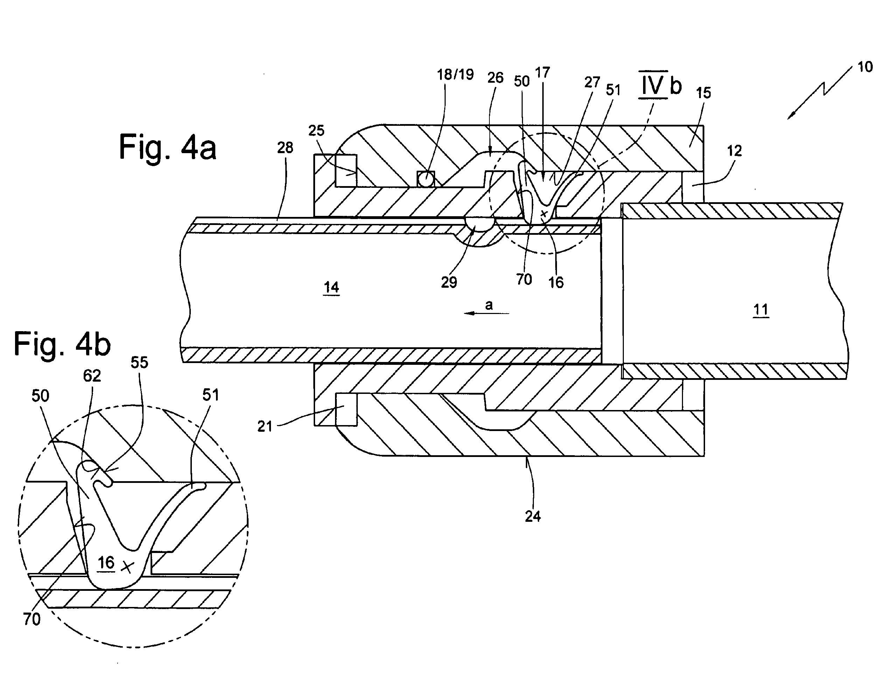

Nunmehr drängt die Steuerfläche der rohrseitigen Rastvertiefung 29 den Rastkörper 16 in seine Lösestellung, wobei beim Entriegelvorgang der erste Schenkel 50 in den Ausweichraum 26 eintaucht. Hierbei gleitet der erste Schenkel 50 - induziert durch eine Federspannung des zweiten Schenkel 51 - derart an der in Einsteckrichtung e vorn liegenden Aussparungswand 70 der Aussparung 17 ab und wird in den Ausweichraum 26 geführt. Gleichzeitig, liegt Gegensteuerschräge 55 an der Steuerschräge 62 des Ausweichraumes 26 an (Fig. 4b). Dies ist in Figur 4a dargestellt.

Mit Abschluss des Auszugvorgangs wird der Betätigungsschieber 15 durch die Rückstellkräfte der Stabfeder 19 in seine Neutrallage zurück verlagert. Hierbei gleitet die Gegensteuerschräge 55 des Schenkels 50 an der Steuerschräge 52 des Ausweichraumes 26 ab, wodurch der Rastkörper 26 zurück in seine Riegelstellung und somit in seine Ausgangsposition gemäß Figur 1 gedrängt wird. Dabei baut sich die Federspannung des zweiten Schenkels 51 auf, welche die vorgenannte Gleitbewegung des ersten Schenkels 50 an der Aussparungswand 70 in den Ausweichraum 26 induziert.

Die Erfindung zeichnet sich folglich dadurch aus, dass sich der Rastkörper 16 durch spreizen des zweiten Schenkels 51 auch bei Sperrstellung des Betätigungsschiebers 15 in die Aussparung 17 des Hülsenbauteils 12 zurückverlagern und somit in Lösestellung verbringen lässt. Beim Einschieben des Rohreinsteckendes 14 in die Muffe 13 ist somit keine Betätigung des Betätigungsschiebers 15 notwendig.

Unter Zugbelastung in Auszugrichtung e drängt die Steuerfläche der Rastvertiefung 29 den starren ersten Schenkel 50 gegen die Sperrfläche 27 und verstärkt somit die Riegelkräfte des Rastkörpers 16.

Nur wenn bei Zugbelastung in Auszugrichtung a des Rohreinsteckendes 14 gleichzeitig am Betätigungsschieber 15 angegriffen wird, kommt es zu einer Relativverlagerung zwischen Betätigungsschieber 15 und Hülsenbauteil 12 in die Lösestellung des Betätigungsschiebers 15. In dieser ist der Eingriff vom ersten Schenkel 50 und der Sperrfläche 27 aufgehoben und der erste Schenkel 50 kann in den Ausweichraum 26 des Betätigungsschiebers 15 eintauchen. Somit ist der Rastkörper 16 durch die Durchbrechung 22 aus dem Muffeninnenraum heraus in seine Lösestellung verlagerbar.

Die Muffe 13 wird vorliegend von einem Hülsenbauteil 12 gebildet, welches bevorzugt auf dem Rohrstutzen 11 aufgesteckt und mit diesem verrastet ist. Dies erlaubt es die Bauteile des Riegelmechanismus vorzumontieren und in einfacher Weise auf dem Rohrstutzen zu verankern. Dabei überfängt der Betätigungsschieber 15 das Hülsenbauteil 12 wenigstens vollständig und deckt die Befestigungsmittel ab, mit denen das Hülsenbauteil 12 am Rohrstutzen 11 angeordnet ist. Dies hat einerseits optisch wesentliche Vorteile, verhindert anderseits aber auch eine unautorisierte Demontage des Hülsenbauteils 12.

Neben der Schnappverrastung ist es ein weiterer Aspekt der Erfindung, einen wirksamen Verdrehschutz zu gewährleisten. Sowohl bei der Anbindung vom Staubsaugersaugrohr zum Handgriff, wie auch bei der Anbindung vom Staubsaugersaugrohr zum Bodenwerkzeug, ist in der Regel eine korrekte Relativausrichtung beider Teile zueinander gewünscht. Um dies auch im Betrieb bei entsprechend auf die Bauteile wirkenden Kräften zu gewährleisten, sind Einrichtungen für einen Verdrehschutz von Nöten.

Die Erfindung realisiert den Verdrehschutz mit Hilfe der Riegelorgane. Der Rastkörper 16 sitzt hierzu bezüglich seiner in Umfangsrichtung der Muffe 13 gerichteten Seitenflächen lediglich mit dem notwendigen Passungsspiel in der hülsenseitigen Ausnehmung 17. Die Rastvertiefung 29 ist so bemessen, dass auch hier die in die Umfangsrichtung weisenden und in Riegelstellung eingreifenden Seitenflächen des Rastkörpers 16 lediglich das notwendige Passungsspiel zu den korrespondierenden Seitenflächen der Rastvertiefung 29 aufweisen. Der Rastkörper 16 bildet so nicht nur ein Riegelelement gegen Bewegung des Rohreinsteckendes 14 in Axialrichtung sondern verhindert in seiner Riegelstellung auch eine Relativbewegung von Hülsenbauteil 12 und Rohreinsteckende 14 in Umfangsrichtung. Insoweit hat der Rastkörper 16 der vorliegenden Erfindung eine Doppelfunktion.

Alternativ oder ergänzend kann der Verdrehschutz durch ein in den vorliegenden Zeichnungen nicht dargestellten, hülsenseitigen Zapfen gebildet werden, der in die Führungsnut 28 eingreift.

### Bezugszeichenliste:

- 10: Staubsauger-Saugrohranordnung
- 11: Rohrstutzen
- 12: Hülsenbauteil
- 13: Muffe
- 14: Rohreinsteckende
- 15: Betätigungsschieber
- 16: Rastkörper
- 17: Aussparung
- 18: Federelement
- 19: Stabfeder
- 20: Nut
- 21: Flansch
- 22: Durchbruch
- 23: Ausweichabschnitt von 17
- 24: Grifffläche
- 25: Stirnfläche von 15
- 26: Ausweichraum
- 27: Sperrfläche
- 28: Führungsnut
- 29: Rastvertiefung
- 30: Stirnseite
- 31: Stirnfläche
- 32: erste Steuerfläche

- 50: erster Schenkel von 16
- 51: zweiter Schenkel von 16
- 53: freies Ende von 50
- 54: freies Ende von 51
- 55: Gegensteuerschräge von 53
- 60: Nutwand von 26
- 61: Nutboden von 26
- 62: Steuerschräge von 26
- 70: Aussparungswand von 12

- a: Auszugsrichtung
- e: Einsteckrichtung

## Patentansprüche

1. Steckverbindbare Staubsauger-Saugrohranordnung (10) mit einer Muffe (13), welche eine Steckaufnahme bildet, in welche ein Rohreinsteckende (14) in Axialrichtung eingesteckt und über Verriegelungsmittel lösbar schnappverrastend gehalten ist, wobei die Verriegelungsmittel muffenseitig von einem Rastkörper (16) und rohrseitig von einer den Rastkörper (16) aufnehmenden Rastvertiefung (29) gebildet sind und wobei der Rastkörper (16) in einer muffenseitigen Aussparung (17) gelagert ist,
und mit einem Betätigungsschieber (15), welcher an der Muffe (13) gegen eine Federrückstellkraft axial beweglich geführt ist und eine Sperrfläche (27) sowie einen Ausweichraum (26) für den Rastkörper (16) ausbildet, wobei die Sperrfläche (27) in der neutralen Axialposition des Betätigungsschiebers (15) den Rastkörper (16) in der Rastvertiefung (29) hält und der Rastkörper (16) in einer gegen die Federrückstellkraft verlagerten Position des Betätigungsschiebers (15) in den Ausweichraum (26) bewegbar ist,
und mit einer der Stirnfläche des Rohreinsteckendes (14) zugeordneten ersten Steuerfläche (32), die beim Einstecken in die Muffe (13) den Rastkörper (16) aus seiner Riegelstellung in eine Lösestellung drängt
und mit einer der Rastvertiefung (29) zugeordneten zweiten Steuerfläche, welche beim Lösen der Schnappverrastung den Rastkörper (16) relativ zur Sperrfläche (27) axial verlagert und entriegelnd in den Ausweichraum (26) drängt,
**dadurch gekennzeichnet, dass** der Betätigungsschieber (15) beim Einstecken des Rohreinsteckendes (14) in die Muffe (13) in seiner Neutralstellung verbleibt und die erste Steuerfläche (32) beim Einstecken des Rohreinsteckendes (14) in die Muffe (13) den Rastkörper (16) federrückstellelastisch aus seiner Riegelstellung in seine Lösestellung drängt.

2. Staubsauger-Saugrohranordnung (10) nach Anspruch 1, **dadurch gekennzeichnet, dass** die muffenseitige Aussparung (17) einen Ausweichabschnitt (23) ausbildet, in welchen der von der ersten Steuerfläche (32) in seine Lösestellung gedrängte Rastkörper (16) verlagerbar ist.

3. Staubsauger-Saugrohranordnung (10) nach Anspruch 1 oder 2, **dadurch gekennzeichnet, dass** die erste Steuerfläche (32) beim Einstecken des Rohreinsteckendes (14) in die Muffe (13) den Rastkörper (16) federrückstellelastisch aus seiner Riegelstellung gegen die Sperrfläche (27) des Betätigungsschiebers (15) in seine Lösestellung drängt, wobei der Rastkörper (16) in den Ausweichabschnitt (23) verlagert wird.

4. Staubsauger-Saugrohranordnung (10) nach einem der Ansprüche 1 bis 3, **dadurch gekennzeichnet, dass** der Rastkörper (16) ein federrückstellelastisches Glied aufweist, welches sich an der Sperrfläche (27) abstützt und den Rastkörper (16) in seiner Sperrstellung hält, beim Einstecken des Rohres jedoch federrückstellelastisch gegen die Sperrfläche (27) gedrängt und in den Ausweichabschnitt (23) verlagert wird.

5. Staubsauger-Saugrohranordnung (10) nach Anspruch 4, **dadurch gekennzeichnet, dass** der Rastkörper (16) im Wesentlichen V-förmig ausgebildet ist, sich mit seinen Schenkeln (50, 51) an der Sperrfläche (27) abstützt und dass der in Einsteckrichtung axial hinten liegende Schenkel (50) federrückstellelastisch ausgebildet ist.

6. Staubsauger-Saugrohranordnung (10) nach Anspruch 5, **dadurch gekennzeichnet, dass** der in Einsteckrichtung axial vorn liegende Schenkel (51) des Rastkörpers (16) im Wesentlichen unelastisch ausgebildet ist.

7. Staubsauger-Saugrohranordnung (10) nach einem der vorhergehenden Ansprüche, **dadurch gekennzeichnet, dass** der Rastkörper (16) in der muffenseitigen Ausnehmung und in seiner Riegelstellung in der Rastvertiefung (29) in Umfangsrichtung lediglich mit einem Passungsspiel gelagert ist und so die Saugrohranordnung (10) verdrehsicher hält.

8. Staubsauger-Saugrohranordnung (10) nach einem der vorhergehenden Ansprüche, **dadurch gekennzeichnet, dass** das Rohreinsteckende (14) mit einer axialen Führungsnut (28) versehen ist, innerhalb derer die Rastvertiefung (29) angeordnet ist und die sich bis zur Stirnseite (30) des Rohreinsteckendes (14) erstreckt.

9. Staubsauger-Saugrohranordnung (10) nach Anspruch 8, **dadurch gekennzeichnet, dass** der Rastkörper (16) beim Einstecken des Rohreinsteckendes (14) in die Muffe (13) in die rohrseitige Führungsnut (28) eingreift.

10. Staubsauger-Saugrohranordnung (10) nach einem der vorhergehenden Ansprüche, **dadurch gekennzeichnet, dass** die Muffe (13) von einem Hülsenbauteil (12) ausgebildet ist, welches an einem Rohrelement angeordnet ist.

11. Staubsauger-Saugrohranordnung (10) nach Anspruch 10, **dadurch gekennzeichnet, dass** der Betätigungsschieber (15) in seiner Neutrallage das Hülsenbauteil (12) und den Anordnungsbereich von Hülsenbauteil (12) und Rohrelement überfängt.

12. Staubsauger-Saugrohranordnung (10) nach einem der vorhergehenden Ansprüche, **dadurch gekennzeichnet, dass** der Betätigungsschieber (15) lediglich in Rohreinsteckrichtung axial verlagerbar ist.

## Claims

1. Vacuum cleaner suction tube arrangement (10) which can be connected by pushing in, having a sleeve (13) which forms a push-in receptacle into which a push-in end of the tube (14) is pushed in the axial direction and in which it is held via interlocking means so as to be releasable in a snap-latching manner, wherein said interlocking means are formed, on the sleeve, by a latching body (16) and, on the tube, by a latching depression (29) that receives said latching body (16), and wherein said latching body (16) is mounted in a clearance (17) in the sleeve;
and having an actuating slide (15) which is guided on the sleeve (13) so as to be axially movable against a resilient restoring force, and forms a blocking face (27) and also an evading space (26) for the latching body (16), wherein the blocking face (27) holds said latching body (16) in the latching depression (29) when the actuating slide (15) is in the neutral axial position, and said latching body (16) can be moved into the evading space (26) when the actuating slide (15) is in a position in which it is displaced against the resilient restoring force;
and having a first control face (32) which is associated with the end face of the push-in end of the tube (14) and which, when pushed into the sleeve (13), forces the latching body (16) out of its locking position and into a releasing position;
and having a second control face which is associated with the latching depression (29) and which, when the snap-latching connection is released, forces the latching body (16) into the evading space (26) in an axially displaced manner, relative to the blocking face (27), and in an unlocking manner;
**characterised in that**
the actuating slide (15) remains in its neutral position when the push-in end of the tube (14) is pushed into the sleeve (13), and the first control face (32) forces the latching body (16) out of its locking position and into its releasing position in a resiliently restoring elastic manner when the push-in end of the tube (14) is pushed into the sleeve (13).

2. Vacuum cleaner suction tube arrangement (10) according to Claim 1, **characterised in that** the clearance (17) in the sleeve forms an evading section (23) into which the latching body (16), which is forced into its releasing position by the first control face (32), can be displaced.

3. Vacuum cleaner suction tube arrangement (10) according to Claim 1 or 2, **characterised in that** the first control face (32) forces the latching body (16) out of its locking position against the blocking face (27) of the actuating slide (15) and into its releasing position in a resiliently restoring elastic manner when the push-in end of the tube (14) is pushed into the sleeve (13), said latching body (16) being displaced into the evading section (23).

4. Vacuum cleaner suction tube arrangement (10) according to one of Claims 1 to 3, **characterised in that** the latching body (16) has a resiliently restoring elastic member which is supported on the blocking face (27) and holds the latching body (16) in its blocking position, but which forces said latching body (16) against the blocking face (27) in a resiliently restoring elastic manner, and displaces it into the evading section (23), when the tube is pushed in.

5. Vacuum cleaner suction tube arrangement (10) according to Claim 4, **characterised in that** the latching body (16) is of substantially V-shaped construction and is supported by means of its legs (50, 51) on the blocking face (27), and that the leg (50) which is located at the rear axially in the direction of pushing-in is of resiliently restoring elastic construction.

6. Vacuum cleaner suction tube arrangement (10) according to Claim 5, **characterised in that** that leg (51) of the latching body (16) which is located at the front axially in the direction of pushing-in is of substantially inelastic construction.

7. Vacuum cleaner suction tube arrangement (10) according to one of the preceding claims, **characterised in that** the latching body (16) is mounted in the recess in the sleeve and in its locking position in the latching depression (29) merely with a fitting clearance in the peripheral direction, and thus holds the suction tube arrangement (10) in a twist-proof manner.

8. Vacuum cleaner suction tube arrangement (10) according to one of the preceding claims, **characterised in that** the push-in end of the tube (14) is provided with an axial guide groove (28) inside which the latching depression (29) is arranged and which extends as far as the end face (30) of said push-in end of the tube (14).

9. Vacuum cleaner suction tube arrangement (10) according to Claim 8, **characterised in that** the latching body (16) engages in the guide groove in the tube when the push-in end of the tube (14) is pushed into the sleeve (13) .

10. Vacuum cleaner suction tube arrangement (10) according to one of the preceding claims, **characterised in that** the sleeve (13) is formed by a bush-type component (12) which is arranged on a tube element.

11. Vacuum cleaner suction tube arrangement (10) according to Claim 10, **characterised in that**, in its neutral location, the actuating slide (15) covers the bush-type component (12) and the region in which said bush-type component (12) and the tube element are arranged.

12. Vacuum cleaner suction tube arrangement (10) according to one of the preceding claims, **characterised in that** the actuating slide (15) is axially displaceable only in the direction of pushing-in of the tube.

## Revendications

1. Dispositif d'encliquetage de tuyau d'aspiration d'aspirateur (10) avec un manchon (13) lequel forme une douille dans laquelle est insérée une extrémité d'insertion de tuyau (14) en direction axiale et est maintenue de manière amovible, avec effet d'encliquetage, par des moyens de verrouillage, les moyens de verrouillage étant formés, côté manchon, par un corps d'enclenchement (16) et, côté tuyau, par un creux d'enclenchement (29) recevant le corps d'enclenchement (16), et le corps d'enclenchement (16) étant placé dans une cavité (17) côté manchon, et avec un coulisseau d'actionnement (15), lequel est guidé, mobile, axialement, au niveau du manchon (13) à l'opposé d'une force de rappel élastique et forme une face de blocage (27) ainsi qu'un espace d'échappement (26) pour le corps d'enclenchement (16), la face de blocage (27) maintenant dans la position axiale neutre du coulisseau d'actionnement (15) le corps d'enclenchement (16) dans le creux d'enclenchement (29) et le corps d'enclenchement (16) étant mobile dans une position, déplacée à l'opposé de la force de rappel élastique, du coulisseau d'actionnement (15) dans l'espace d'échappement (26), et avec une première face de commande (32) associée à la face frontale de l'extrémité d'insertion de tuyau (14), qui pousse, lors de l'insertion dans le manchon (13), le corps d'enclenchement (16) de sa position de verrouillage dans une position de libération, et avec une deuxième face de commande associée au creux d'enclenchement (29) qui, lors de la libération de l'arrêt à encliquetage, déplace le corps d'enclenchement (16) axialement par rapport à la face de blocage (27) et pousse, débloquant, dans l'espace d'échappement (26), **caractérisé en ce que** le coulisseau d'actionnement (15) reste dans sa position neutre lors de l'insertion de l'extrémité d'insertion de tuyau (14) dans le manchon (13), et la première face de commande (32) pousse, lors de l'insertion de l'extrémité d'insertion de tuyau (14) dans le manchon (13), le corps d'enclenchement (16) élastiquement de sa position de verrouillage à sa position de libération.

2. Dispositif de tuyau d'aspiration d'aspirateur (10) selon la revendication 1, **caractérisé en ce que** la cavité (17), côté manchon, forme une section d'échappement (23) dans laquelle le corps d'enclenchement (16) poussé de la première face de commande (32) dans sa position de libération peut être déplacé.

3. Dispositif de tuyau d'aspiration d'aspirateur (10) selon la revendication 1 ou 2, **caractérisé en ce que** la première face de commande (32) pousse, lors de l'insertion de l'extrémité d'insertion de tuyau (14) dans le manchon (13), le corps d'enclenchement (16) élastiquement de sa position de verrouillage contre la face de blocage (27) du coulisseau d'actionnement (15) dans sa position de libération, le corps d'enclenchement (16) étant déplacé dans la section d'échappement (23).

4. Dispositif de tuyau d'aspiration d'aspirateur (10) selon l'une des revendications 1 à 3, **caractérisé en ce que** le corps d'enclenchement (16) présente un organe à rappel élastique, lequel s'appuie au niveau de la face de blocage (27) et maintient le corps d'enclenchement (16) dans sa position de blocage, mais est poussé, lors de l'insertion du tuyau, élastiquement contre la face de blocage (27) et est déplacé dans la section d'échappement (23).

5. Dispositif de tuyau d'aspiration d'aspirateur (10) selon la revendication 4, **caractérisé en ce que** le corps d'enclenchement (16) est conçu essentiellement en V, s'appuie avec ses branches (50, 51) au niveau de la face de blocage (27) et **en ce que** la branche (50) placée axialement derrière, dans le sens d'insertion, est conçue à rappel élastique de ressort.

6. Dispositif de tuyau d'aspiration d'aspirateur (10) selon la revendication 5, **caractérisé en ce que** la branche (51) placée axialement devant dans le sens d'insertion, de l'élément d'enclenchement (16) est conçue essentiellement non élastique.

7. Dispositif de tuyau d'aspiration d'aspirateur (10) selon l'une des précédentes revendications, **caractérisé en ce que** le corps d'enclenchement (16) est placé dans la cavité côté manchon et dans sa position de verrouillage, dans le creux d'enclenchement (29), dans la direction circonférentielle, avec seulement un jeu d'adaptation et maintient ainsi, de manière à ne pouvoir tourner, le dispositif de tuyau d'aspiration (10).

8. Dispositif de tuyau d'aspiration d'aspirateur (10) selon l'une des précédentes revendications, **caractérisé en ce que** l'extrémité d'insertion de tuyau (14) est munie d'une rainure de guidage (28) axiale, au sein de laquelle est disposé le creux d'enclenchement (29) et qui s'étend jusqu'au côté frontal (30) de l'extrémité d'insertion de tuyau (14).

9. Dispositif de tuyau d'aspiration d'aspirateur (10) selon la revendication 8, **caractérisé en ce que** le corps d'enclenchement (16) est en prise, lors de l'insertion de l'extrémité d'insertion de tuyau (14) dans le manchon (13), dans la rainure de guidage (28) côté tuyau.

10. Dispositif de tuyau d'aspiration d'aspirateur (10) selon l'une des précédentes revendications, **caractérisé en ce que** le manchon (13) est formé d'un élément de gaine (12) lequel est disposé au niveau d'un élément de tuyau.

11. Dispositif de tuyau d'aspiration d'aspirateur (10) selon la revendication 10, **caractérisé en ce que** le coulisseau d'actionnement (15), dans sa position neutre, couvre l'élément de gaine (12) et la zone d'installation de l'élément de gaine (12) et de l'élément de tuyau.

12. Dispositif de tuyau d'aspiration d'aspirateur (10) selon l'une des précédentes revendications, **caractérisé en ce que** le coulisseau d'actionnement (15) peut être déplacé axialement uniquement dans la direction d'insertion de tuyau.
